# EUROPEAN PATENT SPECIFICATION

(11) **EP 2 633 781 B1**
(45) Date of publication and mention of the grant of the patent: **12.08.2015**
(21) Application number: 13156954.3
(22) Date of filing: 27.02.2013
(51) Int. Cl.: A47B 95/00, A47B 96/14, F16B 12/30, F16B 12/50

(54) **Kit for assembling a support structure of a modular storage system**
Kit zum Aufbau einer Stützstruktur eines modularen Speichersystems
Kit d'assemblage de structure de support d'un système de stockage modulaire

(30) Priority: 28.02.2012 IL 21836812
(43) Date of publication of application: 04.09.2013
(73) Proprietor: Huliot Storage Solutions Ltd, 12145 Upper Galilee (IL)
(72) Inventor: Yogev, Ilan, 12145 Upper Galilee (IL)
(74) Representative: South, Nicholas Geoffrey

(56) References cited:
- EP-A1- 1 293 148
- EP-A1- 1 862 093

## Description

The invention relates to kits for assembling support structures of modular storage systems having storage bins.

### Background of the Invention

Huliot Storage Solutions Ltd., Kibbutz Sdeh Nehemia, Israel www.huliot-storage.com manufactures a wide array of modular storage systems having one or more storage bins. The modular storage systems are suitable for direct wall mounting or mounting on one or more support rails. The support rails are preferably extruded aluminum profiles. When more than one storage bin is used in a modular storage system, the storage bins may be arranged either side-by-side horizontally or vertically stacked. The support rails can be directly wall mounted or alternatively form part of a hanging frame, a single sided stand, a double sided stand, a table stand, a portable frame, and the like.

Commonly owned intermediate document PCT International Patent Application No. PCT/IL2011/000949 entitled Modular Storage System, Fasteners and Method of Assembly Therefor and published under PCT International Publication No. WO 2012/081016 discloses two fastening devices for mounting storage bins on a pair of spaced apart support rails. WO 2012/081016 Figure 1 shows fastening screws and fastening elements. WO 2012/081016 Figure 7 shows discrete one-piece stud-like fasteners.

A kit for assembling a support structure is known from EP 1862093A1.

### Summary of the Invention

The present invention is directed toward kits for assembling a rectangular rigid support structure including an upper spacer and a base spacer for spacing apart a pair of vertical support rails. The kits of the present invention preferably include identical spacers which can be interchangeably used either as an upper spacer or a base spacer. Alternatively, the kits of the present invention can include purpose designed upper and base spacers.

The spacers of the present invention are designed to be used with conventional support rails and hitherto mentioned conventional fastening arrangements, namely, fastening screws and fastening elements or discrete one-piece stud-like fasteners. The spacers of the present invention include spacer ends with inter-engagement arrangements for mechanical inter-engagement with conventional support rails for affording a sturdier support structure than a conventional support structure. The inter-engagement arrangements include one or more integrally formed projections intended for insertion into the support rails. The spacers of the present invention are preferably rigidly assembled from a left spacer member and a right spacer member by a screw, a snap-fit, and the like.

### Brief Description of Drawings

In order to understand the invention and to see how it can be carried out in practice, a preferred embodiment will now be described, by way of a nonlimiting example only, with reference to the accompanying drawings in which similar parts are likewise numbered, and in which:
Fig. 1 shows a front perspective view of a conventional modular storage system including a support structure having a pair of spaced apart left and right vertical support rails, a storage bin, a pair of fastening screws and a pair of fastening elements;
Fig. 2 shows a kit for assembling Figure 1's support structure;
Fig. 3 is a perspective view of a support rail;
Fig. 4 is a transverse cross section of Figure 3's support rail along line B-B;
Fig. 5 is a close up view of an inverted keyhole shaped hanging slot of Figure 1's storage bin;
Fig. 6 is a transverse cross section of Figure 1's support rail along line A-A showing the use of the fastening screw and the fastening element for mounting the storage bin on the right vertical support rail;
Fig. 7 shows a perspective view of a kit for assembling a support structure in accordance with the present invention;
Fig. 8 shows a perspective view of a dissembled spacer;
Fig. 9 shows a perspective view of an assembled support structure in accordance with the present invention; and
Fig. 10 shows a transverse cross section of Figure 9's support rail along line C-C showing the mounting of a spacer end thereon.

### Detailed Description of Drawings

### Conventional Modular Storage System

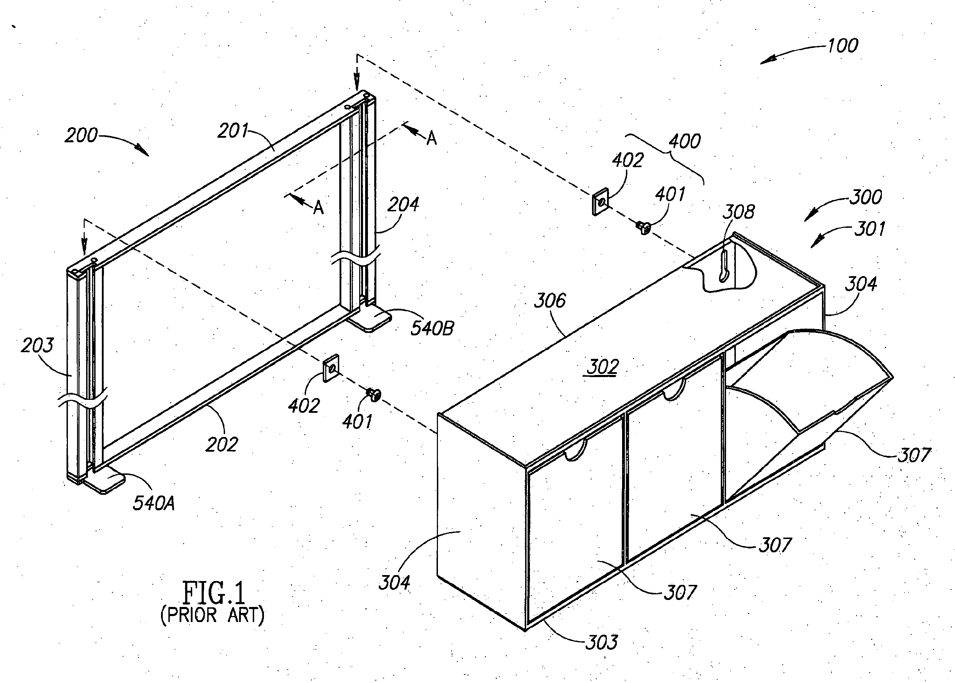

Figure 1 shows a conventional modular storage system 100 including a rectangular rigid support structure 200 for supporting one or more storage bins 300 stacked in a vertical arrangement. Suitable fastening devices 400 are employed for mounting storage bins 300 on the support structure 200. Suitable fastening devices 400 include *inter alia* fastening screws 401 and fastening elements 402 corresponding to WO 2012/081016 Figure 1's fastening screws 11 and fastening elements 12.

The support structure 200 includes a horizontal upper spacer 201 and a horizontal base spacer 202 for spacing apart a pair of left and right vertical support rails 203 and 204. The base spacer 202 may be configured for use in a stationary modular storage system, or alternatively, in a portable modular storage system.

The storage bin 300 is preferably made from plastic and includes a shell 301 including a top storage bin wall 302, a bottom storage bin wall 303, a pair of side storage bin walls 304, and a rear storage bin wall 306. The storage bin 300 includes three compartment drawers 307 for storage purposes. The compartment drawers 307 are removable for *inter alia* assembly purposes for mounting the storage bin 300 on the support structure 200.

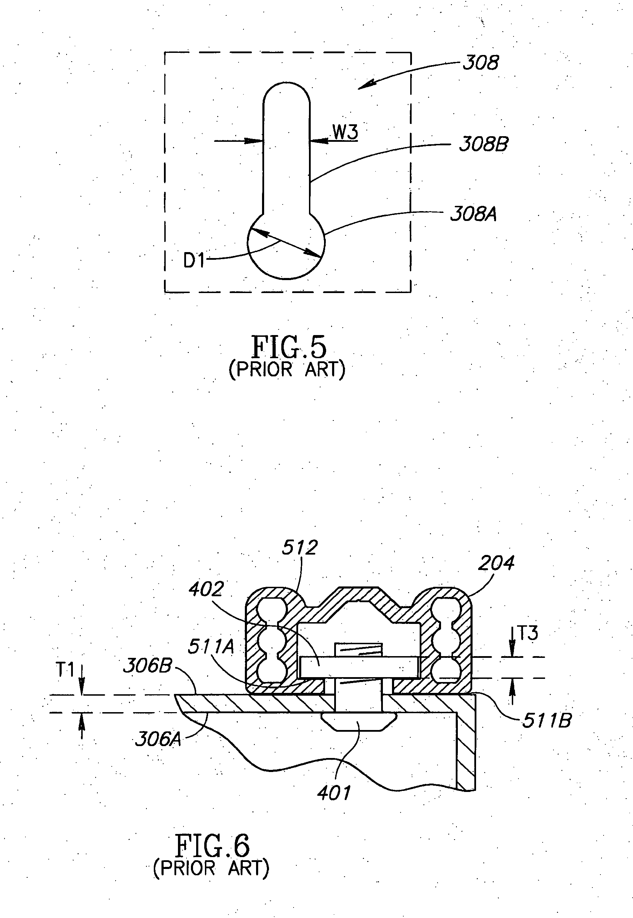

The rear storage bin wall 306 has a wall thickness T1 and opposite internal and external rear storage bin surfaces 306A and 306B respectively facing away from and towards the support structure 200 on mounting the storage bin 300 thereon (see Figure 6). The rear storage bin wall 306 is formed with a pair of spaced apart throughgoing hanging slots 308 for registration with the left and right vertical support rails 203 and 204.

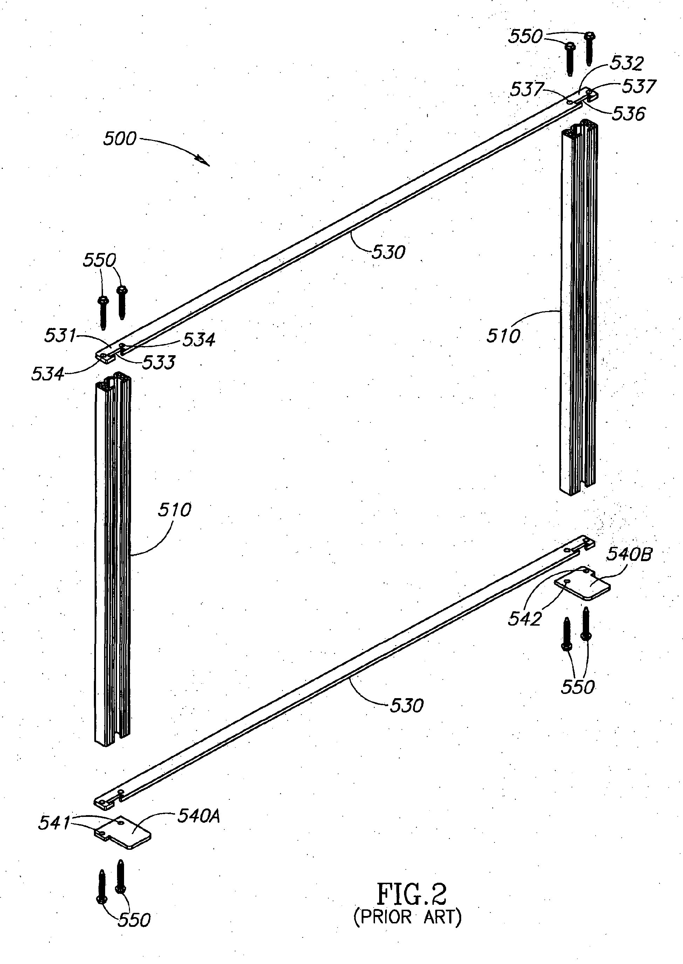

Figure 2 shows a kit 500 for assembling the support structure 200 including the following list of parts:
(a) Pair of identical support rails 510 for use as left and right vertical support rails 203 and 204
(b) Pair of identical spacers 530 for use as upper spacer 201 and base spacer 202
(c) Left and right end plates 540A and 540B
(d) Eight support rail screws 550

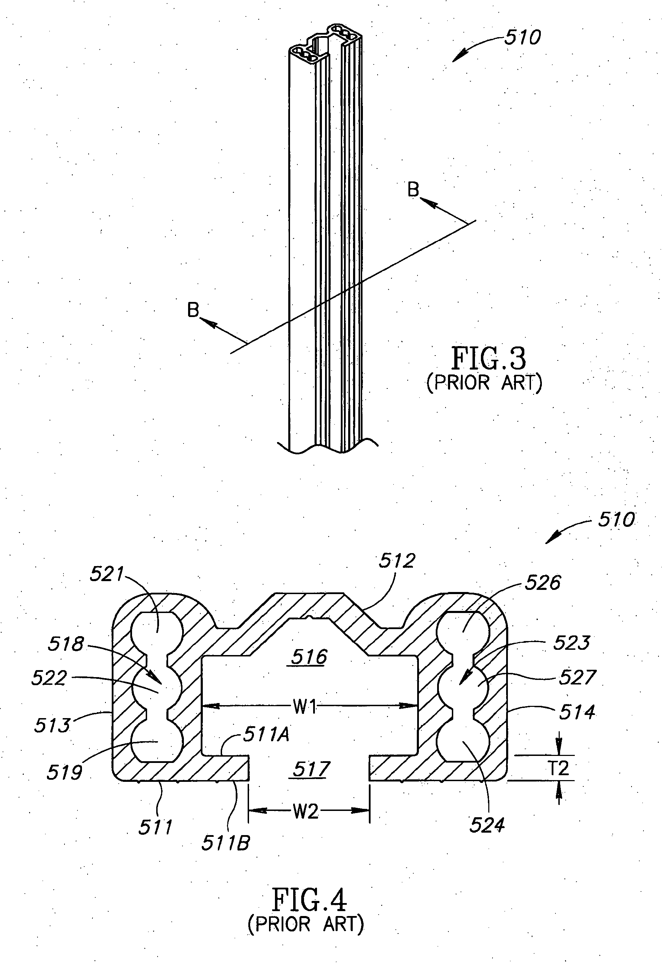

Figures 3 and 4 show the support rails 510 are preferably extruded aluminum profiles having a generally U-shaped transverse cross-section. The support rails 510 include a front support rail wall 511, a rear support rail wall 512 and opposite left and right support rail walls 513 and 514 extending between the front support rail wall 511 and the rear support rail wall 512. The front support rail wall 511 has opposite internal and external surfaces 511A and 511B respectively facing towards and away from the rear support rail wall 512.

The support rails 510 are each formed with a longitudinal directed support rail channel 516 having a longitudinal directed support rail slot 517 formed in the front support rail wall 511. The support rail channel 516 has a width W1 and the support rail slot 517 has a width W2 where W1 > W2. The front support rail wall 511 has a wall thickness T2. The fastening elements 402 have a width W1 for being snugly received in the support rail channels 516 for sliding down therealong.

Each left support rail wall 513 has a longitudinal directed channel 518 including a front channel segment 519 adjacent the front support rail wall 511, a rear channel segment 521 adjacent the rear support rail wall 512 and an intermediate channel segment 522 connecting the front channel segment 519 and the rear channel segment 521. The right support rail wall 514 has a longitudinal directed channel 523 including a front channel segment 524 adjacent the front support rail wall 511, a rear channel segment 526 adjacent the rear support rail wall 512 and an intermediate channel segment 527 connecting the front channel segment 524 and the rear channel segment 526.

Figure 2 shows the spacers 530 are preferably aluminum struts including opposite left and right spacer ends 531 and 532. The spacer end 531 includes a T-shaped cutaway 533 and a pair of throughgoing holes 534 for screw threading a pair of support rail screws 550 therethrough into the intermediate channel segments 522 and 527 of the left vertical support rail 203 such that the T-shaped cutaway 533 aligns with the left vertical support rail's support rail wall channel 516 and the support rail channel 517. The spacer end 532 includes a T-shaped cutaway 536 and a pair of throughgoing holes 537 for screw threading a pair of support rail screws 550 therethrough into the intermediate channel segments 522 and 527 of the right vertical support rail 204 such that the T-shaped cutaway 536 aligns with the right vertical support rail's support rail wall channel 516 and the support rail channel 517. The T-shaped cutaways 533 and 536 are shaped and dimensioned to enable fastening elements 402 to slide therethrough into their underlying support rail wall channels 516.

The left end plate 540A includes a pair of throughgoing holes 541 for registration with the intermediate channel segments 522 and 527 of the left support rail 203. The right end plate 540B includes a pair of throughgoing holes 542 for registration with the intermediate channel segments 522 and 527 of the right support rail 204.

Assembly of the kit 500 to form the support structure 200 includes the following steps: Four support rail screws 550 are employed for mounting a spacer's left spacer end 531 onto the left vertical support rail 203 and its right spacer end 532 onto the right vertical support rail 204 to form the upper spacer 201. Two support rail screws 550 are employed for mounting the other spacer's left spacer end 531 and the left end plate 540A onto the left vertical support rail 203. Two support rail screws 550 are employed for mounting the other spacer's right spacer end 532 and right end plate 540B onto the right vertical support rail 204 to form the lower spacer 202.

Figure 5 shows the hanging slots 308 have an inverted keyhole shape including a lowermost circular aperture 308A and an elongated upright narrow aperture 308B. The aperture 308A has a diameter D1. The aperture 308B has a width W3 where W2>W3 and D1>W3.

Figure 6 shows a fastening element 402 has a thickness T3.

Mounting a storage bin 300 on the support structure 200 includes the following steps: A user removes the compartment drawers 307 from the storage bin 300 to afford access to the throughgoing hanging slots 308. The user pushes the fastening screws 401 through the hanging slots 308 and screw engages the fastening elements 402 facing the external rear storage bin surface 306B. The user holds the storage bin 300 above the support structure 200 such that the external rear storage bin surface 306B faces the left and right vertical support rails 203 and 204. The user aligns the support structure 200 with the left and right vertical support rails 203 and 204 such that the fastening elements 402 are in registration with the support rail channels 516. The user lowers the storage bin 300 such that the fastening elements 402 slide down the support rail channels 516 until the storage bin 300 stops on the end plates 540A and 540B. The user proceeds to tighten the fastening screws 401 such that their heads bear against the internal rear storage bin surface 306A and the fastening elements 402 bear against the internal surface 511A (see Figure 6).

### Kit for Assembling a Support Structure

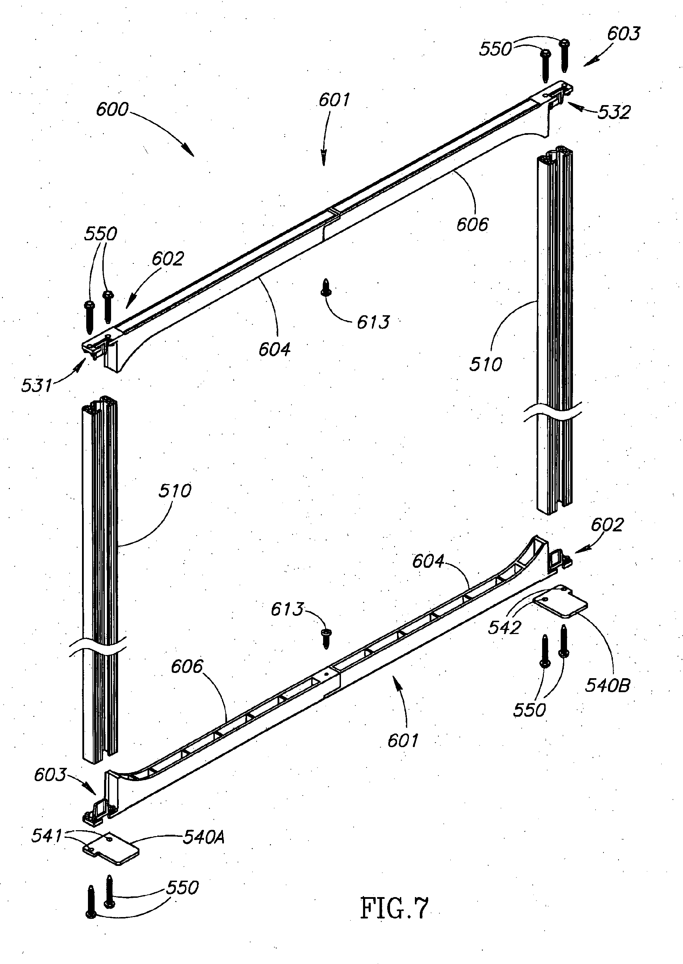

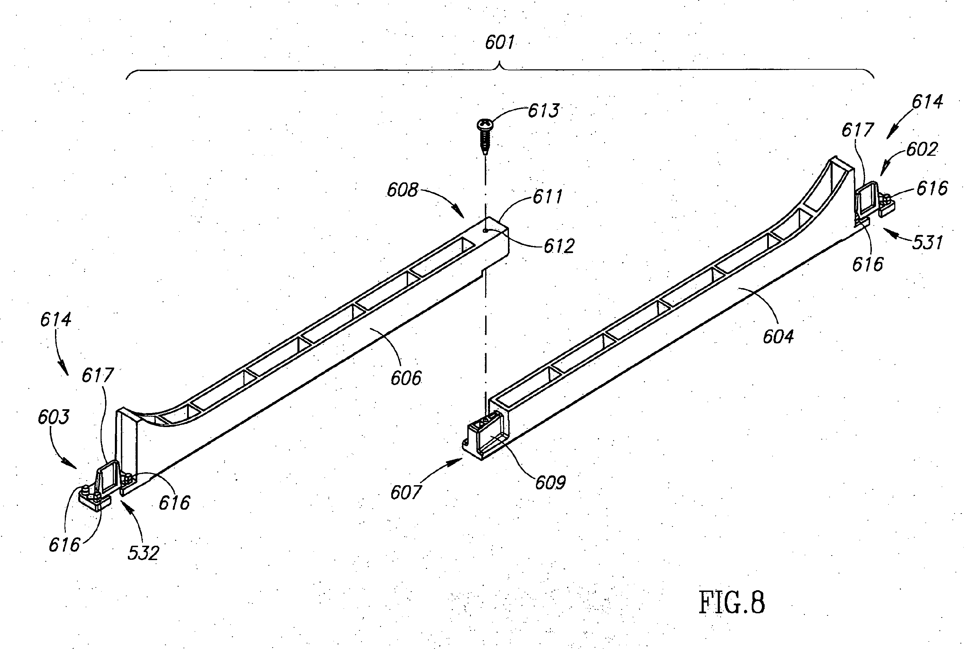

Figures 7 to 10 show a kit 600 for assembling the support structure 200 for supporting the storage bin 300. The kit 600 has the same parts as the kit 500 except the former 600 includes a pair of identical spacers 601 instead of the pair of identical spacers 530. The spacers 601 are preferably made from suitable injection molding material, for example, polypropylene, ABS, polystyrene, and the like. The spacers 601 preferably have a ribbed construction for affording mechanical strength. The spacers 601 include spacer ends 602 and 603 and are preferably assembled from a first spacer member 604 and a second spacer member 606. The first spacer member pair 604 is preferably readily distinguishable from the second spacer member pair 606 for identification purposes. For example, spacer member pairs can be color coded, etc.

Each first spacer member 604 includes a spacer end 602 and a spacer member end 607 for connection with a second spacer member 606. Each second spacer member 606 includes a spacer end 603 and a spacer member end 608 for connection with a first spacer member 602. The spacer member end 607 includes a male connector 609 for mating onto a female connector 611 at the spacer member end 608. The female connector 611 is formed with a throughgoing bore 612 for receiving a spacer assembly screw 613 for screw assembling the spacer member end 608 onto the spacer member end 607.

The spacer ends 602 and 603 are similar to the spacer ends 531 and 532 insofar as the spacer end 602 includes a T-shaped cutaway 533 and a pair of throughgoing holes 534 and the spacer end 602 includes a T-shaped cutaway 536 and a pair of throughgoing holes 537. The spacer ends 602 and 603 differ from the spacer ends 531 and 532 insofar that they each additionally include an integrally formed inter-engagement arrangement 614 for snug insertion into left and right vertical support rails 203 and 204 on mounting a spacer 601 thereon.

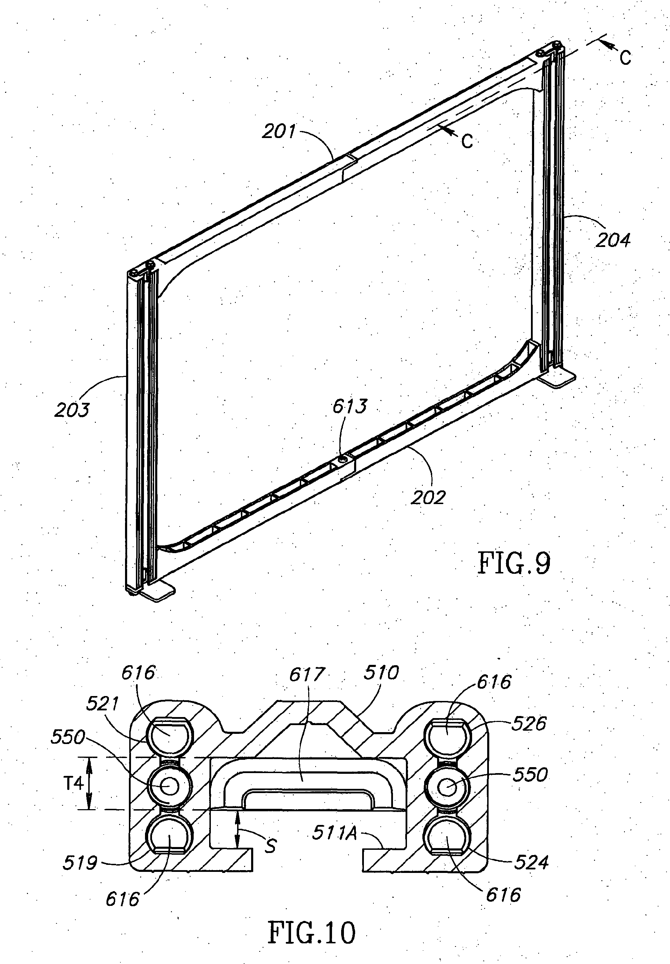

The inter-engagement arrangements 614 include two or more upright pins 616 for snug insertion into a front channel segment 519, a rear channel segment 521, a front channel segment 524 and a rear channel segment 526 of a support rail 510. Figure 10 shows an inter-engagement arrangement 614 including four upright pins 616 for better steadying the spacer 601 in a support rail 510.

The inter-engagement arrangements 614 preferably also include a central upright projection 617 for snug insertion widthwise into a support rail channel 516. The central upright projection 617 has a width W1 and a thickness T4 which leaves a separation S from the front support rail wall's internal surface 511A thereby enabling free passage of a fastening element 402 down the support rail channel 516 for mounting a storage bin 300 onto a support structure 200. Alternatively, an inter-engagement arrangement 614 can include a central upright projection 617 without upright pins 616.

While the invention has been described with respect to a limited number of embodiments, it will be appreciated that many variations, modifications, and other applications of the invention can be made within the scope of the appended claims.

## Claims

1. A kit for assembling a rectangular rigid support structure (200) of a modular storage system (100), the kit comprising:
(a) a pair of left and right vertical support rails (203, 204), each said vertical support rail having a generally U-shaped transverse cross section and including a front support rail wall (511), a rear support rail wall (512) and a pair of opposite left and right support rail walls (513, 514) extending between said front support rail wall (511) and said rear support rail wall (512) for defining a longitudinal directed support rail channel (516) having a longitudinal directed support rail slot (517) formed in said front support rail wall (511),
each said left support rail wall (513) having a longitudinal directed channel (518) including a front channel segment (519) adjacent said front support rail wall (511), a rear channel segment (521) adjacent said rear support rail wall (512) and an intermediate channel segment (522) connecting said front channel segment (519) and said rear channel segment (521),
each said right support rail wall (514) having a longitudinal directed channel (523) including a front channel segment (524) adjacent said front support rail wall (511), a rear channel segment (526) adjacent said rear support rail wall (512) and an intermediate channel segment (527) connecting said front channel segment (514) and said rear channel segment (526); and
(b) a pair of spacers (530, 530) for spacing apart said pair of left and right vertical support rails (203, 204) wherein each said spacer (530) includes a pair of opposite spacer ends (531, 532) for mounting on said pair of left and right vertical support rails (203, 204),
said pair of opposite spacer ends (531, 532) having a T-shaped cutaway (533, 536) for registration with said longitudinal directed channels of said pair of left and right vertical support rails (203, 204),
**characterized in that**
said pair of opposite spacer ends (531, 532) includes integrally formed inter-engagement arrangements (614) for snug insertion into said pair of left and right vertical support rails (203, 204) on mounting a said spacer thereon.

2. The kit according to claim 1 wherein said inter-engagement arrangement includes at least two upright pins for snug insertion into at least two of said front channel segment and said rear channel segment of a said left support rail wall and said front channel segment and said rear channel segment of a said right support rail wall.

3. The kit according to either claim 1 or 2 wherein each said inter-engagement arrangement includes a central upright projection for snug insertion widthwise into said support rail channel of a said support rail.

4. The kit according to any one of claims 1 to 3 wherein each said spacer includes a first spacer member and a second spacer member, said first spacer member having a spacer member end for connection with said second spacer member and a said spacer end for mounting on said left vertical support rail, and said second spacer member having a spacer member end for connection with said first spacer member and a spacer end for mounting on said right vertical support rail.

## Patentansprüche

1. Bausatz zum Aufbau einer starren rechteckigen Stützstruktur (200) eines modularen Aufbewahrungssystems (100), wobei der Bausatz umfasst:
(a) ein Paar aus linker und rechter vertikaler Stützschiene (203, 204), wobei jede vertikale Stützschiene einen allgemein U-förmigen Querschnitt aufweist und eine vordere Stützschienenwand (511), eine hintere Stützschienenwand (512) und ein Paar aus linker und gegenüberliegender rechter Stützschienenwand (513, 514), die sich zwischen der vorderen Stützschienenwand (511) und der hinteren Stützschienenwand (512) erstreckt, beinhaltet, um einen längsgerichteten Stützschienenkanal (516) mit einem längsgerichteten Stützschienenschlitz (517) zu definieren, der in der vorderen Stützschienenwand (511) gebildet ist,
wobei jede linke Stützschienenwand (513) einen längsgerichteten Kanal (518) aufweist, der ein vorderes Kanalsegment (519) angrenzend an die vordere Stützschienenwand (511), ein hinteres Kanalsegment (521) angrenzend an die hintere Stützschienenwand (512) und ein Kanalzwischensegment (522), welches das vordere Kanalsegment (519) und das hintere Kanalsegment (521) verbindet, beinhaltet,
wobei jede rechte Stützschienenwand (514) einen längsgerichteten Kanal (523) aufweist, der ein vorderes Kanalsegment (524) angrenzend an die vordere Stützschienenwand (511), ein hinteres Kanalsegment (526) angrenzend an die hintere Stützschienenwand (512) und ein Kanalzwischensegment (527), welches das vordere Kanalsegment (514) und das hintere Kanalsegment (526) verbindet, beinhaltet,
(b) ein Paar von Abstandshaltern (530, 530), zum Beabstanden der linken und der rechten vertikalen Stützschiene (203, 204), wobei jeder der Abstandshalter (530) ein Paar aus gegenüberliegenden Abstandshalterenden (531, 532) zum Montieren an dem Paar aus linker und rechter vertikaler Stützschiene (203, 204) beinhaltet,
wobei das Paar aus gegenüberliegenden Abstandshalterenden (531, 532) einen T-förmigen Ausschnitt (533, 536) zum Einpassen in die längsgerichteten Kanäle des Paars aus linker und rechter vertikaler Stützschiene (203, 204) aufweist,
**dadurch gekennzeichnet, dass**
das Paar aus gegenüberliegenden Abstandshalterenden (531, 532) einstückig daran gebildete Verbindungseingriffsanordnungen (614) zum festsitzenden Einsetzen in das Paar aus linker und rechter vertikaler Stützschiene (203, 204) beim Montieren eines Abstandshalters daran beinhaltet.

2. Bausatz nach Anspruch 1, wobei die Verbindungseingriffsanordnung mindestens zwei aufrechte Stifte zum festsitzenden Einsetzen in mindestens zwei aus dem vorderen Kanalsegment und dem hinteren Kanalsegment der linken Stützschienenwand sowie dem vorderen Kanalsegment und dem hinteren Kanalsegment der rechten Stützschienenwand beinhaltet.

3. Bausatz nach Anspruch 1 oder 2, wobei jede Verbindungseingriffsanordnung einen mittigen aufrechten Vorsprung zum festsitzenden Einsetzen in Breiterichtung in den Stützschienenkanal einer Stützschiene beinhaltet.

4. Bausatz nach einem der Ansprüche 1 bis 3, wobei jeder Abstandshalter ein erstes Abstandshalterelement und ein zweites Abstandshalterelement beinhaltet, wobei das erste Abstandshalterelement ein Abstandshalterelementende zur Verbindung mit dem zweiten Abstandshalterelement und ein Abstandshalterende zum Montieren an der linken vertikalen Stützschiene aufweist und das zweite Abstandshalterelement ein Abstandshalterelementende zur Verbindung mit dem ersten Abstandshalterelement und ein Abstandshalterende zum Montieren an der rechten vertikalen Stützschiene aufweist.

## Revendications

1. Kit d'assemblage d'une structure de support rigide rectangulaire (200) d'un système de stockage modulaire (100), le kit comportant :
(a) une paire de rails de support verticaux gauche et droit (203, 204), chaque dit rail de support vertical ayant une section transversale généralement en forme de U et comprenant une paroi de rail de support avant (511), une paroi de rail de support arrière (512) et une paire de parois de rail de support gauche et droite opposées (513, 514) s'étendant entre ladite paroi de rail de support avant (511) et ladite paroi de rail de support arrière (512) pour définir un profilé de rail de support dirigé dans le sens longitudinal (516) ayant une fente de rail de support dirigée dans le sens longitudinal (517) formée dans ladite paroi de rail de support avant (511),
chaque dite paroi de rail de support gauche (513) ayant un profilé dirigé dans le sens longitudinal (518) comprenant un segment de profilé avant (519) adjacent par rapport à ladite paroi de rail de support avant (511), un segment de profilé arrière (521) adjacent par rapport à ladite paroi de rail de support arrière (512) et un segment de profilé intermédiaire (522) reliant ledit segment de profilé avant (519) et ledit segment de profilé arrière (521),
chaque dite paroi de rail de support droite (514) ayant un profilé dirigé dans le sens longitudinal (523) comprenant un segment de profilé avant (524) adjacent par rapport à ladite paroi de rail de support avant (511), un segment de profilé arrière (526) adjacent par rapport à ladite paroi de rail de support arrière (512) et un segment de profilé intermédiaire (527) reliant ledit segment de profilé avant (514) et ledit segment de profilé arrière (526) ; et
(b) une paire d'entretoises (530, 530) permettant d'espacer ladite paire de rails de support verticaux gauche et droit (203, 204), dans lequel chaque dite entretoise (530) comprend une paire d'extrémités d'entretoise opposées (531, 532) à des fins de montage sur ladite paire de rails de support verticaux gauche et droit (203, 204),
ladite paire d'extrémités d'entretoise opposées (531, 532) ayant une partie découpée en forme de T (533, 536) à des fins d'alignement sur lesdits profilés dirigés dans le sens longitudinal de ladite paire de rails de support verticaux gauche et droit (203, 204),
**caractérisé en ce que**
ladite paire d'extrémités d'entretoise opposées (531, 532) comprend des agencements à mise en prise mutuelle formés d'un seul tenant (614) à des fins d'insertion serrée dans ladite paire de rails de support verticaux gauche et droit (203, 204) lors du montage d'une dite entretoise sur ceux-ci.

2. Kit selon la revendication 1, dans lequel ledit agencement à mise en prise mutuelle comprend au moins deux goupilles verticales à des fins d'insertion serrée dans au moins deux parmi ledit segment de profilé avant et ledit segment de profilé arrière d'une dite paroi de rail de support gauche et ledit segment de profilé avant et ledit segment de profilé arrière d'une dite paroi de rail de support droite.

3. Kit selon la revendication 1 ou la revendication 2, dans lequel chaque dit agencement à mise en prise mutuelle comprend une partie saillante verticale centrale à des fins d'insertion serrée dans le sens de la largeur dans ledit profilé de rail de support d'un dit rail de support.

4. Kit selon l'une quelconque des revendications 1 à 3, dans lequel chaque dite entretoise comprend un premier élément d'entretoise et un deuxième élément d'entretoise, ledit premier élément d'entretoise ayant une extrémité d'élément d'entretoise à des fins de liaison avec ledit deuxième élément d'entretoise et une dite extrémité d'entretoise à des fins de montage sur ledit rail de support vertical gauche, et ledit deuxième élément d'entretoise ayant une extrémité d'élément d'entretoise à des fins de liaison avec ledit premier élément d'entretoise et une extrémité d'entretoise à des fins de montage sur ledit rail de support vertical droit.
